# EUROPÄISCHE PATENTANMELDUNG

(11) **EP 2 187 067 A1**
(43) Veröffentlichungstag der Anmeldung: **19.05.2010**
(21) Anmeldenummer: 09169874.6
(22) Anmeldetag: 09.09.2009
(51) Int. Cl.: F16B 7/02

(54) **Krafteinleitungsanordnung für eine Faserverbundabspannstange**

(30) Priorität: 18.11.2008 DE 102008057893
(71) Anmelder: Manitowoc Crane Group France SAS, 69130 Ecully (FR)
(72) Erfinder: Stephan, Volker, 26409 Wittmund (DE)
(74) Vertreter: Schwabe - Sandmair - Marx

(57) **Zusammenfassung**

Die Erfindung betrifft eine Krafteinleitungsanordnung für eine Faserverbundabspannstange, mit einem Angriffselement (1), dessen Querschnitt sich zumindest in einem Teilbereich (2) in einer von der Abspannstange (12) weg weisenden Richtung verjüngt, so dass das Angriffselement (1) im Teilbereich (2) mit einem den Teilbereich (2) umgebenden Endbereich (4) der Abspannstange (12) einen Formschluss eingeht, wobei sich das Angriffselement (1) zum Einleiten einer Kraft aus der ein Hohlprofil aufweisenden Abspannstange (12) heraus erstreckt. Ferner betrifft die Erfindung ein Herstellungsverfahren einer Krafteinleitung für eine Faserverbundabspannstange (12) mit dem formschlüssigen Verbinden eines Angriffselements (1) mit der Abspannstange (12) in einem sich in einer von der Abspannstange (12) weg weisenden Richtung verjüngenden Teilbereich (2) des Angriffselements (1).

## Beschreibung

Die Erfindung betrifft eine Krafteinleitungsanordnung für eine Abspannstange mit einem Angriffselement und einem Faserverbundstab, die in einem Teilbereich des Angriffselements einander einen Formschluss eingehen, wobei sich der Teilbereich in einer vom Faserverbundstab weg weisenden Richtung verjüngt.

Eine Abspannstange mit einer solchen Krafteinleitungsanordnung kann gemäß der vorliegenden Erfindung im Kranbau zur Abspannung einer Gittermastspitze dienen. Die Anwendung ist jedoch nicht auf eine Abspannung von Gittermastspitzen beschränkt, sondern kann sich insbesondere im Kranbau auf zahlreiche andere Bereiche erstrecken, in welchen Bauteile mit axialen Zugkräften beaufschlagt werden, wobei die Kräfte in einen Faserverbundwerkstoff eingeleitet werden müssen.

Abspannstangen aus einem Faserverbundwerkstoff weisen gegenüber herkömmlichen Abspannstangen aus Stahl den Vorteil auf, dass sie bei geringerem Eigengewicht gleich hohe Zugkräfte aufnehmen können. Im umgekehrten Fall können durch eine Abspannstange aus einem Faserverbundwerkstoff bei gleich bleibendem Eigengewicht höhere Zugkräfte aufgenommen werden.

Aus der DE 10 2006 039 565 A1, der DE 102 49 591 A1 und der DE 10 2004 021 144 A1 sind Krafteinleitungen für Faserverbundstäbe bekannt, wobei zur Krafteinleitung in den Faserverbundstab Kraftangriffselemente durch Verklebungen stoff- und/oder reibschlüssig mit den entsprechenden Faserverbundstäben verbunden sind.

Solche Krafteinleitungsanordnungen sind jedoch nur bis zu einem gewissen Betrag der in den Faserverbundstab einzuleitenden Kraft anwendbar. Somit ist diese Art der Krafteinleitungsanordnungen für Anwendungsgebiete ungeeignet, in welchen sehr hohe Kräfte auftreten, wie beispielsweise im Kranbau.

Es ist die Aufgabe der vorliegenden Erfindung, eine geeignete Krafteinleitungsanordnung für einen Faserverbundabspannstange bereitzustellen, mit welcher auch sehr hohe Kräfte in die Abspannstange eingeleitet werden können. Auch soll eine wartungsfreie, einstellungsfreie und günstig herzustellende Abspannstange bereitgestellt werden.

Diese Aufgabe wird durch den Gegenstand des Anspruchs 1 gelöst. Die Unteransprüche definieren dabei bevorzugte Ausführungsformen der vorliegenden Erfindung.

Die erfindungsgemäße Krafteinleitungsanordnung umfasst ein Angriffselement, an welchem die in die Abspannstange einzuleitende Kraft angreift. Eine solche angreifende Kraft verläuft dabei im Wesentlichen parallel zur Längsachse der Abspannstange. Erfindungsgemäß verjüngt sich der Querschnitt des Angriffselements in einer von der Abspannstange wegweisenden Richtung zumindest in einen Teilbereich des Angriffselements, so dass das Angriffselement im Teilbereich mit einem den Teilbereich umgebenden Endbereich der Abspannstange einen Formschluss eingehen kann. Mit anderen Worten weist das der Abspannstange zugewandte Ende des Teilbereichs und demzufolge auch der dieses Ende umgebende Endbereich der Abspannstange einen größeren Querschnitt auf als das der Abspannstange abgewandte Ende des Teilbereichs mit dem ihm umgebenden Endbereich der Abspannstange. Somit ist es nicht möglich, das Angriffselement von der Abspannstange weg durch die Verjüngung am Ende der Abspannstange "herauszuziehen". Durch den so erzeugten Formschluss zwischen Angriffselement und Abspannstange ist es möglich, sehr hohe am Angriffselement angreifende Kräfte in die Abspannstange einzuleiten. Ferner weist die Abspannstange ein Hohlprofil auf, so dass diese das Angriffselement im Teilbereich umfänglich ganz umschließt, wobei sich das Angriffselement aus der dieses Hohlprofil aufweisenden Abspannstange heraus erstreckt, so dass die in die Abspannstange einzuleitende Kraft außerhalb der Abspannstange am Angriffselement angreifen kann. So muss die einzuleitende Kraft nicht durch separate Bauteile in einen von der Abspannstange umgebenden Bereich innerhalb des Hohlprofils geleitet werden. Durch das sich aus dem Hohlprofil heraus erstreckende einteilige Angriffselement werden Verbindungsstellen zwischen kraftweiterleitenden Bauteilen vermieden, die strukturelle Schwachstellen darstellen und beispielsweise ausreißen können. Jedoch ist es prinzipiell auch denkbar, dass die in die Abspannstange einzuleitende Kraft am Angriffselement innerhalb des Hohlprofils der Abspannstange angreift, so dass sich das Angriffselement nicht zwingenderweise aus der Abspannstange heraus erstrecken muss. Ebenso muss der Teilbereich des Angriffselements weder in umfänglicher noch in axialer Richtung vollständig von der Abspannstange umgeben sein, bevorzugt wird jedoch zumindest in umfänglicher Richtung eine vollständige "Umhüllung" des Angriffselements im Teilbereich durch die Abspannstange, so dass das Angriffselement auch in jeder radialen Richtung mit der Abspannstange formschlüssig verbunden ist.

Weiter bevorzugt weist die Krafteinleitungsanordnung zumindest in dem Bereich, in welchem die Abspannstange das Angriffselement "umhüllt" bzw. die Abspannstange und das Angriffselement radial übereinander angeordnet sind, eine Art Umwicklung am äußeren Umfang der Abspannstange auf. Diese Umwicklung kann durch Ausbilden einer weiteren Faserverbundschicht realisiert werden, wobei der Faserverlauf dieser Faserverbundschicht bevorzugt quer zur Längsachse der Abspannstange verläuft. Besonders bevorzugt wird ein orthogonal zur Längsrichtung der Abspannstange stehender und zumindest im Teilbereich des Angriffselements umfänglich verlaufender Faserverlauf der Umwicklung. Zweck dieser Umwicklung ist es, den Formschluss zwischen Angriffselement und Abspannstange zu unterstützen. So ist es unmöglich, das verjüngte Ende der Abspannstange durch Herausziehen des Angriffselements zu weiten, da die umfängliche Umwicklung eine Weitung des Abspannstangenendes durch Aufnahme der wirkenden Kräfte in Umfangsrichtung wirkungsvoll verhindert.

In diesem Zusammenhang soll der Begriff axial so verstanden werden, dass eine axiale Richtung parallel zu einer Längsachse die Abspannstange verläuft.

In einer weiteren bevorzugten Ausführungsform weist sowohl der Teilbereich des Angriffselements als auch der Abspannstange einen rotationssymmetrischen Querschnitt auf, wobei die Symmetrieachse des Teilbereichs des Angriffselements mit der Symmetrieachse der Abspannstange zusammenfällt. Durch eine rotationssymmetrische Ausgestaltung der Abspannstange kann diese vorteilhafterweise Torsionsmomente besser aufnehmen als eine Abspannstange mit asymmetrischem Querschnitt. Ein weiterer Vorteil eines runden Profils der Abspannstange ist die Vermeidung von durch Windkräfte induzierten Schwingungen in der Abspannstange.

Die Abspannstange kann ferner am Angriffselement flächig angrenzen, so dass ein direkter körperlicher Kontakt zwischen der Abspannstange und dem Angriffselement zustande kommt. Insbesondere im Teilbereich des Angriffselements ist ein direkter Kontakt der Abspannstange mit dem Angriffselement ohne die Zwischenschaltung weiterer Elemente vorteilhaft, da so die am Angriffselement angreifende Kraft direkt in die Abspannstange eingeleitet werden kann, ohne den Kraftfluss unnötig umzulenken, indem dieser über weitere zwischengeschaltete Elemente geführt wird. Jedoch sind weitere im oder an der Abspannstange ausgebildete Lagen, beispielsweise Schichten zum Schutz vor thermischen oder mechanischen Einwirkungen auf die Abspannstange oder elektrisch leitende Schichten, wie auch elektrisch isolierende Schichten als zur Abspannstange gehörig und somit nicht als separate oder gar "zwischengeschaltete" Elemente anzusehen.

Ebenso kann sich der Teilbereich des Angriffselements von der Abspannstange weg zumindest abschnittsweise konisch verjüngen oder, anders ausgedrückt, kann die Verjüngung des Teilbereichs über die Längsachse des Teilbereichs im Wesentlichen konstant verlaufen. Vorteilhafterweise wird dadurch ein möglichst geradliniger Faserverlauf in der Abspannstange und somit ein geradliniger Kraftverlauf in der Abspannstange bewirkt, was die Belastbarkeit der Krafteinleitungsanordnung verbessert.

In einer weiter bevorzugten Ausführungsform ändert sich der Querschnittsgradient des Innenumfangs der Abspannstange in axialer Richtung im Teilbereich des Angriffselements abrupt. Besonders bevorzugt wird eine abrupte Änderung des Querschnittsgradienten im Bereich des Endes des Teilbereichs, welches der Abspannstange zugewandt ist. Durch eine solche abrupte Änderung, insbesondere wenn sich durch die Querschnittsgradientenänderung die Innen- bzw. Außenwandung der Abspannstange von einem sich verjüngenden Bereich in einen sich im Wesentlichen parallel zur Längsachse der Abspannstange verlaufenden Bereich ändert, kann durch so eine abrupte Querschnittsgradientenänderung ein eindeutiger Bereich definiert werden, in welchem die Krafteinleitung vom Angriffselement in die Abspannstange aufgrund Formschluss stattfindet.

Ferner ist es möglich, dass der zylindrische Kern der Abspannstange am der Abspannstange zugewandten Ende des Teilbereichs angrenzt. Somit wird an der Innenwandung der Abspannstange ein nahtloser Übergang vom Teilbereich des Angriffselements zum Kern der Abspannstange geschaffen. Ferner ist auch eine Ausgestaltungsform vorstellbar, bei welcher das gesamte Angriffselement direkt an den Kern der Abspannstange angrenzt, wobei insbesondere der sich verjüngende Teilbereich am der Abspannstange zugewandten Ende des Angriffselements ausgebildet ist.

Weiter bevorzugt umfasst die Abspannstange einen gewickelten Faserverbund. So kann einerseits die Faserverbundschicht gewickelt werden, welche den Hauptteil der Last, also die eingeleitete Kraft aufnimmt, jedoch sind auch eine Vielzahl weiterer gewickelter Faserverbundschichten der Abspannstange denkbar, beispielsweise gewickelte Schutzschichten zum Schutz vor UV-Strahlung oder zum Unterbinden eines elektrischen Kontakts zwischen Angriffselement und einer weiteren Faserverbundschicht der Abspannstange. Ein gewickelter Faserverbund hat den Vorteil, dass durch ein preiswertes Verfahren ein beliebiges Profil der Abspannstange hergestellt werden kann und große Querschnitte und dicke Wandstärken herstellbar sind. Insbesondere bei der Verjüngung des Angriffselements im Endbereich der Abspannstange mit der dadurch verbundenen Querschnittsverjüngung der Abspannstange ist somit eine gewickelte Abspannstange von Vorteil, da so die Querschnittsänderung der Abspannstange leicht realisiert werden kann. Auch schnürt sich das sich verjüngende Ende der Abspannstange bei Belastung, also beim "Herausziehen" des Angriffselements zu und verstärkt den Formschluss. Normalerweise weist eine gewickelte Abspannstange mehrere wenige, beispielsweise höchstens 4 oder höchstens 2 Vorzugsrichtungen für den Faserverlauf des Faserverbundes auf, wobei durch FEM-Berechnungen eine exakte Reproduzierbarkeit gewickelter Abspannstangen erzielt werden kann.

Ferner kann die erfindungsgemäße Krafteinleitungsanordnung einen am Angriffselement umfänglich umlaufenden Kragen aufweisen, an welchem sich die umfängliche Umwicklung des Abspannstangenendes in axialer Richtung abstützen kann. Dieser Kragen kann mit dem Angriffselement verbunden sein, beispielsweise verklebt oder verschweißt sein oder Eingriffselement umfassen, die in korrespondierende Eingriffselemente am Angriffselement eingreifen können, wie beispielsweise ein Gewinde. Somit wird ein "Abrutschen" der Umwicklung am Abspannstangenende in Richtung des von der Abspannstange weg weisenden Endes des Angriffselements verhindert, so dass ein sicherer Formschluss zwischen Angriffselement und Abspannstange aufrechterhalten werden kann.

Gemäß der vorliegenden Erfindung kann das Angriffselement im Wesentlichen einen Eisenbasiswerkstoff umfassen, wie beispielsweise Stahl. Insbesondere kann das gesamte Angriffselement aus Stahl gefertigt sein. Ferner kann die Abspannstange im Wesentlichen einem Kohlefaserverbundwerkstoff umfassen, wobei der Kohlefaserverbundwerkstoff im Wesentlichen die gesamte axial aufgebrachte Kraft aufnimmt, welche über das Angriffselement in die Abspannstange eingeleitet wird. Somit bildet die Lage aus dem Kohlefaserverbundwerkstoff die "Tragschicht" der Abspannstange. Daneben kann die Abspannstange selbstverständlich weitere Elemente umfassen, beispielsweise einen sich koaxial zur Längsachse der Abspannstange erstreckenden Kern, um welchen die Faserverbundschichten der Abspannstange angeordnet sind und/oder weitere Lagen zum Schutz der Abspannstange vor beispielsweise UV-Strahlung oder mechanischen auf die Umfangsfläche der Abspannstange wirkenden mechanischen Kräften, elektrisch isolierende Schichten zum Abgrenzen von Elementen mit verschiedenen Elektronegativitäten oder elektrisch leitende Schichten zum Abführen elektrischer Energie durch beispielsweise Blitzschlag. Insbesondere kann die Abspannstange bzw. die Krafteinleitungsanordnung eines oder mehrere der folgenden Elemente umfassen:
- Eine Schicht bzw. eine Lage mit einem Kupferbasiswerkstoff zum Ableiten elektrischer Energie, die beispielsweise durch Blitzschlag hervorgerufen wird. Eine solche Schicht ist vorzugsweise am äußeren Umfang der Abspannstange angeordnet und liegt weiter bevorzugt direkt am äußeren Umfang der Kohlefaserverbundschicht der Abspannstange an.
- Eine erste Lage bzw. eine erste Schicht mit einem Glasfaserverbundwerkstoff zum Schutz vor UV-Strahlung, wobei diese Schicht vorzugsweise die äußerste Schicht der Abspannstange darstellt.
- Einer zweiten Lage bzw. einer zweiten Schicht mit einem Glasfaserverbundwerkstoff zum elektrischen Isolieren des Angriffselements von der Kohlefaserverbundschicht der Abspannstange, wobei diese zweite Schicht vorzugsweise an der Grenzfläche zwischen der Kohlefaserverbundschicht der Abspannstange und dem Angriffselement ausgebildet ist. Somit wird wirkungsvoll Kontaktkorrosion unterbunden, welche aufgrund der verschiedenen Elektronegativitäten des Angriffselements aus Stahl und des Kohlefaserverbundwerkstoffs auftreten würde.
- Eine am äußersten Umfang der Abspannstange, also am Umfang der äußersten Lage der Abspannstange angeordnete Umwicklung zum Schutz vor mechanischer Einwirkung auf die Umfangsfläche der Abspannstange. Eine solche Umwicklung kann einen Strang aus einem Glasfaserverbundwerkstoff umfassen, der sich spiralförmig in Längsrichtung über zumindest die Endbereiche der Abspannstange auf der Umfangsfläche erstreckt. Dadurch werden wirkungsvoll Schläge auf die Umfangsfläche der Abspannstange verhindert, welche Schäden an der Abspannstange durch Delamination hervorrufen können. Diese Umwicklung kann sich auch über die Umfangsfläche der Umwicklung an dem Abspannstangenende erstrecken, welche den Formschluss zwischen Angriffselement und Abspannstange sicherstellt.

Die Erfindung betrifft ferner ein Verfahren zur Herstellung der erfindungsgemäßen Krafteinleitung für eine Abspannstange.

Erfindungsgemäß umfasst dieses Verfahren das formschlüssige Verbinden des Angriffselements mit der Abspannstange in einem Teilbereich des Angriffselements, welcher sich in einer von der Abspannstange weg weisenden Richtung verjüngt.

Bevorzugterweise kann das erfindungsgemäße Herstellungsverfahren einen oder mehrere der folgenden Schritte umfassen:
- Das Angriffselement wird an ein Ende eines Kerns angesetzt, wobei der Kern eine gestreckte zylindrische Form aufweisen kann. Dazu kann ein Zentrierelement Verwendung finden, mit dem das Angriffselement nur in einer bestimmten Lage bzw. einer bestimmten Position oder Ausrichtung am Kern angesetzt werden kann. Ein solches Zentrierelement kann beispielsweise ein konzentrisch im Kern angeordnetes und sich daraus heraus erstreckendes Rohr sein, auf welches das Angriffselement mittels einer zentrischen Bohrung aufgesetzt werden kann.
- Um den Kern und zumindest um einen Teil des am Kern angesetzten Angriffselements kann dann beispielsweise durch Wickeltechnik eine Abspannstange ausgebildet werden. Dabei soll gemäß der Erfindung die Abspannstange auch zumindest über einen Teil des sich verjüngenden Teilbereichs des Angriffselements ausgebildet werden, so dass das Angriffselement schon durch Umhüllung bzw. durch Umwickeln mit der Abspannstange mit dem Kern verbunden ist. In diesem Zusammenhang kann das Ausbilden der Abspannstange um den Kern und um das Angriffselement mehrere Einzelschritte umfassen, wie beispielsweise das Wickeln der Kohlefaserverbundschicht als die wesentliche Tragschicht der Abspannstange, das Wickeln einzelner Glasfaserverbundschichten zum Ausbilden von Schutzschichten oder Isolationsschichten sowie das Ausbilden einer elektrisch leitfähigen Schicht aus beispielsweise Kupfer. Zum Ausbilden der Faserverbundschichten sind grundsätzlich auch andere Verfahren vorstellbar, beispielsweise Pultrosion, Flechten, Stricken oder das manuelle Legen von preimprägniertem Faserverbundmaterial.
- Der Bereich in welchem die Abspannstange radial über dem Angriffselement angeordnet ist, also insbesondere der sich verjüngende Bereich des Angriffselements kann zum Sichern des Formschlusses umfänglich umwickelt werden, wobei eine Umwicklung mit einem Faserverbundwerkstoff bevorzugt wird. Im Falle der Umwicklung mit einem Faserverbundwerkstoff sollte der Faserverlauf in der Wickelschicht wenn möglich radial umlaufen oder zumindest so ausgestaltet sein, dass ein sicheres Halten der Abspannstange am sich verjüngenden Teilbereich des Angriffselements erreicht wird. Dies kann beispielsweise durch eine FEM-Simulation geschehen, so dass auch bei Verwendung von nicht radial umlaufenden Fasern eine ausreichend stabile Umwicklung des Abspannstangenendes erzielt wird.
- Nach Erzeugen einzelner Faserverbundschichten können diese dann in einem Trocknungsprozess aushärten, nachdem jeweils eine Matrix auf das gewickelte Material der einzelnen Lagen aufgebracht wird, sofern nicht schon vorgefertigte "Prepregs" verwendet werden. Zur Beschleunigung dieses Prozesses kann das Aushärten zusätzlich unter Erhöhung der Temperatur stattfinden.
- Das sich weg von der Abspannstange über den verjüngenden Teilbereich des Angriffselements hinaus erstreckende gewickelte Material kann dann beispielsweise mechanisch von der Abspannstange abgetrennt werden, so dass im Anschluss daran ein am Angriffselement umlaufender Kragen auf das Angriffselement aufgesetzt werden kann, welcher die umfängliche Umwicklung des Abspannstangenendes in Position hält.
- Ein Schutz vor mechanischen Einflüssen auf die Umfangsfläche der Abspannstange kann beispielsweise durch spiralförmiges Umwickeln der Abspannstange mit einem Strang aus einem Glasfaserverbundwerkstoff realisiert werden. Falls ein Bauteil auf die Umfangsfläche der Abspannstange aufschlägt, so berührt er zuerst den spiralförmig um die Abspannstange gewickelten Strang, so dass kein physischer Kontakt des Gegenstands mit der eigentlichen Umfangsfläche der Abspannstange zu Stande kommt.
- Die fertig hergestellte Abspannstange mit den an seinen Enden ausgebildeten Krafteinleitungen kann dann unter einer Prüflast gereckt werden, wobei in Verbindung mit einer bevorzugten Ausführungsform der vorliegenden Erfindung die Prüflast 1800 kN beträgt, jedoch ist auch eine geringere oder höhere Prüflast je nach Ausgestaltung und Dimensionierung der betreffenden Abspannstange vorstellbar.

Die vorliegende Erfindung wird anhand der beiliegenden Figur an einer bevorzugten Ausführungsform näher erläutert. Die Erfindung kann alle hierin offenbarten Merkmale einzeln sowie in jedweder sinnvollen Kombination umfassen.

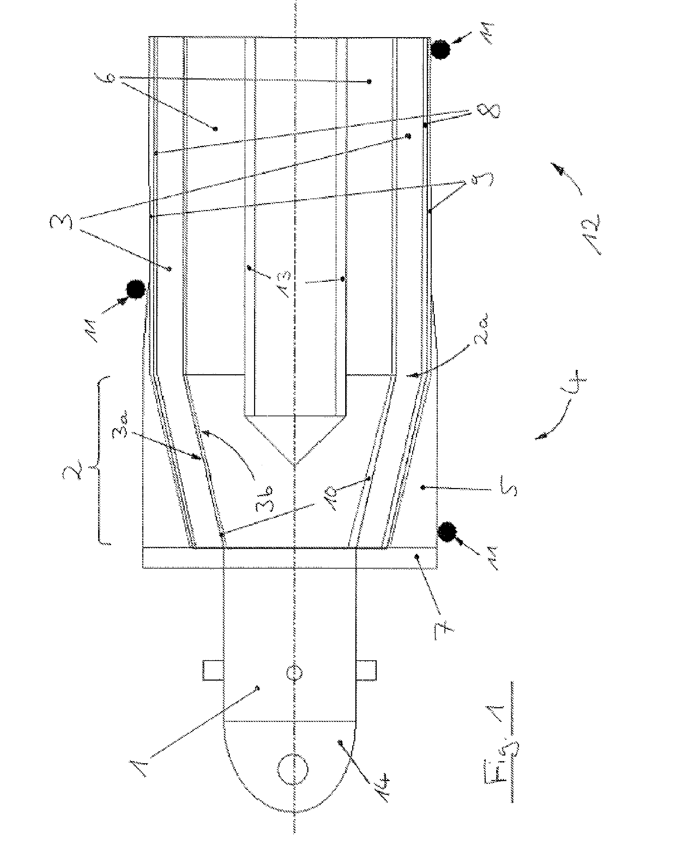

In der Figur 1 ist ein axialer Schnitt durch einen Endbereich einer Abspannstange mit der erfindungsgemäßen Krafteinleitungsanordnung zu sehen.

Die Abspannstange 12 umfasst im Wesentlichen eine Kohlefaserverbundschicht (CFK), welche in der Figur 1 das Bezugszeichen 3 trägt. Auf der inneren Umfangsfläche der Kohlefaserverbundschicht 3 ist eine Glasfaserverbundschicht 10 ausgebildet, deren Zweck später noch erläutert wird. Am äußeren Umfang der Kohlefaserverbundschicht 3 ist eine elektrisch leitende Schicht 8 ausgebildet, welche Kupfer umfasst, mittels welcher die durch Blitzschlag in die Abspannstange eingebrachte elektrische Energie abgeführt werden kann. Auf der äußeren Umfangsfläche der elektrisch leitenden Schicht 8 ist eine weitere Schicht 9 aus einem Glasfaserwerkstoff ausgebildet, welche die Abspannstange 12 vor der Einwirkung von UV-Strahlung schützt. Die oben genannten Schichten 3, 8, 9 und 10 werden am äußeren Umfang des länglichen und zylindrischen Kerns 6 ausgebildet, welcher sich über die gesamte Länge der Abspannstange 12 erstreckt. Insbesondere die Faserverbundschichten 3, 9 und 10 können dabei durch eine Wickeltechnik hergestellt werden, so dass diese Schichten wenige definierte Vorzugsrichtungen für den Faserverlauf aufweisen.

Am linken Ende 4 der Abspannstange 12 ist ein Angriffselement 1 angeordnet, über welches eine in der Abspannstange 12 einzuleitende Kraft angreifen kann. Dazu ist am linken Ende des Angriffselements 1 eine Kraftaufnahme in Form eines Auges ausgebildet. Zum rechten Ende des Angriffselements 1 hin erweitert sich der Querschnitt in einen Teilbereich 2, so dass von der Abspannstange 12 aus gesehen sich der Teilbereich 2 von der Abspannstange 12 weg verjüngt. Dabei stellt das in der Abspannstange 12 zugewandte Ende 2a des sich verjüngenden Teilbereichs 2 auch das der Abspannstange 12 zugewandte Ende des Angriffselements 1 dar, welches flächig am Kern 6 anliegt. Am Ende 2a weist der Teilbereich 2 des Angriffselements 1 den gleichen Umfang auf wie der Kern 6. Die Zentrierung des Angriffselements 1 mit der Abspannstange 12 bzw. dem Kern 6 kommt durch ein koaxial verlaufendes Kunststoffrohr 13 an der inneren Umfangsfläche des Kerns 6 mit einem Hohlprofil zustande, welches sich aus dem Kern 6 heraus erstreckt. Auf dieses herausstehende Ende des Kunststoffrohrs 13 kann das Angriffselement 1 aufgesetzt werden und zusätzlich mit dem Kern 6 stoffschlüssig verbunden, beispielsweise verklebt werden.

Zumindest im Teilbereich 2 in welchem die Abspannstange 12 mit den zusätzlichen Schichten 8, 9 und 10 den Teilbereich 2 umfänglich umgibt, ist die Abspannstange 12 umfänglich durch eine weitere Faserverbundschicht 5 umwickelt. Der Faserverlauf in dieser Faserverbundschicht verläuft dabei ebenfalls umfänglich. Um diese Umwicklung 5 in Position, nämlich im Teilbereich 2 zu halten, ist am Angriffselement 1 zusätzlich ein umlaufender Kragen 7 angeordnet, welcher stoffschlüssig auf das Angriffselement 1 aufgeklebt ist. Ferner ist in der Figur 1 ein sich spiralförmig am äußeren Umfang der Abspannstange 12 erstreckender Schutz in Form eines Glasfaserstrangs 11 angeordnet.

Da der Kohlefaserverbundwerkstoff 3 eine zum Eisenbasiswerkstoff des Angriffselements 1 unterschiedliche Elektronegativität aufweist, ist an der Grenzfläche 3b zwischen dem Kohlefaserverbundwerkstoff 3 und dem Angriffselement 1 eine elektrisch isolierende Glasfaserverbundwerkstoffschicht 10 angeordnet, um Kontaktkorrosion zu vermeiden.

Erfindungsgemäß wird zur Herstellung der Krafteinleitungsanordnung das Angriffselement 1 am Ende des Kerns 6 über das Kunststoffrohr 13 aufgesetzt und mit diesem und/oder mit dem Kern 6 verklebt. Das Kunststoffrohr 13 dient ferner der Festlegung der Bauteillänge. Auch bietet es zusammen mit dem Kern 6 den Vorteil, dass zumindest geringe Druckkräfte in axialer wie auch radialer Richtung auf die Abspannstange 12 aufgebracht werden können. Danach können am äußeren Umfang des Kerns 6 und zumindest am äußeren Umfang im Teilbereich 2 des Angriffselements 1 nacheinander die verschiedenen Lagen bzw. Schichten 3, 8, 9 und 10 der Abspannstange 12 durch Wickeltechnik nacheinander ausgebildet werden. Zum Erzeugen der Wickeltechnik notwendige Rotation des Kerns 6 und des Angriffselements 1 dienen die in der Figur 1 nicht näher bezeichneten Noppen am Umfang des linken Bereichs des Angriffselements 1. Sobald die einzelnen Lagen aufgebracht worden sind, wird im Teilbereich 2 das Ende der Abspannstange 12 zum Aufrechterhalten des Formschlusses zwischen Abspannstange 12 und Angriffselement 1 umfänglich umwickelt. Nachdem die einzelnen Faserverbundschichten ausgehärtet sind wird das sich über den Teilbereich 2 hinaus erstreckende Material der Abspannstange 12 mechanisch abgetrennt und der Kragen 7 auf das Angriffselement 1 aufgeschoben und mit diesem verklebt. So kann die Umwicklung 5 durch Abstützung am Kragen 7 in Position am Teilbereich 2 gehalten werden. Zusätzlich wird noch ein Schlagschutz in Form des am äußeren Umfang der Abspannstange 12 spiralförmig umlaufenden Glasfaserstrangs 11 angebracht.

Um im Betrieb einen Schlupf zwischen dem Angriffselement 1 und der Abspannstange 12 zu verhindern, wird die fertig hergestellte Abspannstange 12 mit der erfindungsgemäßen Krafteinleitungsanordnung unter Prüflast von 1800 kN gereckt, wobei die Nennlast der Abspannstange 12 ca. 1300 kN betragen kann.

Eine solche Abspannstange 12 kann beispielsweise eine Länge von 12.000 mm, einen Durchmesser von 120 mm und eine Wanddichte von 10 mm aufweisen.

## Patentansprüche

1. Krafteinleitungsanordnung für eine Faserverbundabspannstange, mit einem Angriffselement (1), dessen Querschnitt sich zumindest in einem Teilbereich (2) in einer von der Abspannstange (12) weg weisenden Richtung verjüngt, so dass das Angriffselement (1) im Teilbereich (2) mit einem den Teilbereich (2) umgebenden Endbereich (4) der Abspannstange (12) einen Formschluss eingeht, wobei sich das Angriffselement (1) zum Einleiten einer Kraft aus der ein Hohlprofil aufweisenden Abspannstange (12) heraus erstreckt.

2. Krafteinleitungsanordnung nach Anspruch 1, wobei das Angriffselement als ein einteiliges Bauteil einen außerhalb des Hohlprofils der Abspannstange (12) gelegenen Kraftangriffsbereich (14) und einen innerhalb des Hohlprofils der Abspannstange (12) gelegenen und sich verjüngenden Teilbereich (2) aufweist.

3. Krafteinleitungsanordnung nach Anspruch 1 oder Anspruch 2, wobei die Abspannstange (12) zumindest in dem Bereich, in welchem die Abspannstange (12) und das Angriffselement (1) radial übereinander angeordnet sind, umwickelt ist, insbesondere mit einem Faserverbundwerkstoff (5) umwickelt ist, wobei im Speziellen der Faserverlauf des Faserverbundwerkstoffes (5) im Wesentlichen umfänglich ausgebildet ist.

4. Krafteinleitungsanordnung nach einem der Ansprüche 1 bis 3, wobei der Teilbereich (2) des Angriffselements (1) und/oder die Abspannstange (12) einen rotationssymmetrischen Querschnitt aufweist.

5. Krafteinleitungsanordnung nach einem der Ansprüche 1 bis 4, wobei die Abspannstange (12) am Angriffselement (1), insbesondere im Teilbereich (2) des Angriffselements (1) flächig angrenzt.

6. Krafteinleitungsanordnung nach einem der Ansprüche 1 bis 5, wobei sich der Teilbereich (2) des Angriffselements (1) konisch verjüngt.

7. Krafteinleitungsanordnung nach einem der Ansprüche 1 bis 6, wobei sich der Querschnittsgradient des Innenumfangs (3a) der Abspannstange (12) in axialer Richtung im Teilbereich (2), insbesondere an dem der Abspannstange (12) zugewandten Ende (2a) des Teilbereichs (2) abrupt ändert.

8. Krafteinleitungsanordnung nach einem der Ansprüche 1 bis 7, wobei an dem der Abspannstange (12) zugewandten Ende (2a) des Teilbereichs (2) ein zylindrischer Kern (6) angrenzt.

9. Krafteinleitungsanordnung nach einem der Ansprüche 1 bis 8, wobei die Abspannstange (12) einen gewickelten Faserverbund umfasst, mit insbesondere mehreren Vorzugsrichtungen des Faserverlaufs.

10. Krafteinleitungsanordnung nach einem der Ansprüche 1 bis 9, mit ferner einem das Angriffselement (1) umfänglich umlaufenden Kragen (7), welcher insbesondere mit dem Angriffselement (1) stoffschlüssig verbunden ist, an dem sich der Faserverbund (5) in axialer Richtung abstützt.

11. Krafteinleitungsanordnung nach einem der Ansprüche 1 bis 10, wobei das Angriffselement (1) im Wesentlichen einen Eisenbasiswerkstoff, insbesondere Stahl umfasst, und die Abspannstange (12) im Wesentlichen einen Kohlefaserverbundwerkstoff umfasst.

12. Krafteinleitungsanordnung nach einem der Ansprüche 1 bis 11, mit ferner einem oder mehreren der folgenden Elemente:
- einer Lage (8) mit einem Kupferbasiswerkstoff, insbesondere angrenzend an der äußeren Umfangsfläche der Abspannstange (12) angeordnet;
- einer ersten Lage (9) mit einem Glasfaserverbundwerkstoff, insbesondere an der äußeren Umfangsfläche der Abspannstange (12) angeordnet;
- einer zweiten Lage (10) mit einem Glasfaserverbundwerkstoff, insbesondere zumindest an der Grenzfläche (3b) zwischen dem Angriffselement (1) und der Abspannstange (12) angeordnet;
- einer Umwicklung mit einem Strang (11) aus einem Glasfaserverbundwerkstoff, insbesondere an der äußeren Umfangsfläche der Abspannstange (12) angeordnet.

13. Herstellungsverfahren einer Krafteinleitung für eine Faserverbundabspannstange (12) mit dem formschlüssigen Verbinden eines Angriffselements (1) mit der Abspannstange (12) in einem sich in einer von der Abspannstange (12) weg weisenden Richtung verjüngenden Teilbereich (2) des Angriffselements (1).

14. Herstellungsverfahren nach Anspruch 13, wobei das Verfahren einen oder mehrere der folgenden Schritte umfasst:
- Ansetzen eines Angriffselements (1) an ein Ende (4) eines Kerns (6), insbesondere mittels eines zentrierenden Verbindungsrohres (13);
- Wickeln eines Faserverbundwerkstoffes um den Kern (6) und zumindest einen Teil des Angriffselements (1) zu einer ein Hohlprofil aufweisenden Abspannstange (12) mit einem Kohlefaserverbund, die insbesondere zusätzliche Lagen (8, 9, 10) aus einem Glasfaserverbundwerkstoff und/oder Kupferbasiswerkstoff aufweist;
- Umwickeln der Abspannstange (12) zumindest in dem Bereich, in welchem die Abspannstange (12) radial über dem Angriffselement (1) angeordnet ist, mit einem Faserverbundwerkstoff (5);
- Aushärten des gewickelten Materials (3, 5, 8, 9, 10);
- Entfernen des sich weg von der Abspannstange (12) über den Teilbereich (2) hinaus erstreckenden gewickelten Materials (3, 5, 8, 9, 10);
- Ansetzen eines Kragens (7) am Angriffselement (1);
- Erzeugen eines Schutzes durch spiralförmiges Umwickeln der Abspannstange (12) mit einem Strang (11) aus einem Glasfaserverbundwerkstoff;
- Recken der fertigen Abspannstange (12) mit der Krafteinleitung unter Prüflast, insbesondere mit über 1300 kN, im Speziellen mit über 1700 kN.
